# EUROPEAN PATENT APPLICATION

(11) **EP 2 868 626 A1**
(43) Date of publication of application: **06.05.2015**
(21) Application number: 14460071.5
(22) Date of filing: 20.10.2014
(51) Int. Cl.: B82Y 30/00, C08K 3/04, C08G 18/00, C08J 5/00

(54) **Polyurethane elastomer nanocomposites and a method of their manufacturing**

(30) Priority: 22.10.2013 PL 40573113
(71) Applicant: Politechnika Gdanska, 80-233 Gdansk (PL)
(72) Inventor: Piszczyk, Tukasz, 80-107 Gdansk (PL); Haponiuk, Józef, 80-344 Gdansk (PL); Strankowski, Michal, 80-177 Gdansk (PL); Danowska, Magdalena, 80-266 Gdansk (PL)

(57) **Abstract**

The method of manufacturing polyurethane elastomer nanocomposites with the use of oligomerols, oligoesterols and/or oligoetherols, diisocyanates, chain extending or cross-linking agents, amine or organometallic catalysts, and graphene oxide or its reduced form wherein the prepolymer containing 4-20% of free isocyanate groups NCO originated from oligomers in the form of oligoetherols and/or oligoestrols with a molecular weight between 400 and 15 000 g/mol is mixed with 0.01-10 wt.% of nanofiller in the form of graphene oxide, its reduced form, or the nanofiller dispersion prepared in polar or nonpolar solvent, in oligomeric component or in the oligomerol-based mixture containing low-molecular-weight chain extender, or dispersed in isocyanate agent. Next, the mixture is intensively homogenized at a temperature between 10 and 60°C and the stirring rate up to 10000 rpm for 3 hrs in an ultrasound bath.

Polyurethane elastomer nanocomposites obtained according to the aforementioned method are also the object of the invention.

## Description

The object of the invention are polyurethane elastomer nanocomposites made by the addition of graphene oxide or its reduced form, and the method for their manufacturing.

Graphene is a single two-dimensional layer of sp² hybridized carbon atoms arranged in a hexagonal network. The length of C-C bond in this structure equals 1.42 A. The crystallographic network has a shape of a honeycomb. Graphene is obtained by micromechanical peeling of graphite, chemical deposition from gas phase onto catalytic carriers, thermal decomposition of SiC, reduction of graphite oxide via thermal decomposition and reduction with hydrogen, and by exfoliation reactions. Graphene is characterized by favorable properties such as, very high thermal conductivity ranging from 4440 to 5480 W/mK, mechanical strength (graphene is 100 times stronger than steel of the same thickness), Young module of ca. 1 Tpa. This materials has high elasticity, slight resistance, high transparency (it absorbs 2.3% of light), and high specific surface area (2630 m2/g) [21.Y. Zhu, S. Murali, W. Cai, X. Li, J. W. Suk, J. R. Potts, R. S. Ruoff, Graphene and Graphene Oxide: Synthesis, Properties, and Applications, Adv. Mater. 2010, XX, 1-19].

Due to its unique properties that are similar to those of graphene, graphene oxide (GO) became the focus of attention, mainly thanks to the presence of hydroxyl and carboxyl groups on its surface. Graphene oxide is hydrophilic, water soluble and non-conductive material. In 1859, Benjamin C. Brodie synthesized GO for the first time by adding potassium chloride and graphite in the form of paste to fuming nitric acid. The most common method of obtaining GO is Hummers method, which was developed in 1958. In this method, graphite is oxidized with KMnO₄, NaNO₃ and concentrated H₂SO₄. During the reaction, toxic and possibly explosive gases such as, NO₂, N₂O₄ and ClO₂ are released [D. C. Marcano, D. V. Kosynkin, J. M. Berlin, A. Sinitskii, Z. Sun, A. Slesarev, L. B. Alemany, W. Lu, J. M. Tour, Improved Synthesis of Graphene Oxide, ACS Nano, 4 (2010) 4806]. The improved method of obtaining graphene oxide is based on the oxidation of graphite under strong oxidizing conditions (concentrated H₂SO₄, KMnO₄) with added concentrated H₃PO₄.The reduction of graphene oxide can be conducted by the following methods: chemical method via the proper choice of organic or inorganic solution; electrochemical method based on choosing appropriate electrolyte and electrochemical potential; thermal method via choosing appropriate temperature and atmosphere, with the use of UV, appropriate wavelength and time, and microwave action. The reduced graphene oxide (rGO) is a black solid in the form of powder that does not dissolve in water.

Polyurethane nanocomposites are the dispersions of nanometer-size solid particles in polyurethane matrix. Nanocomposites consist of two main components, i.e. polymeric matrix (continuous phase) and nanofiller (dispersed phase), the latter having one of its dimensions not larger than 100 nm. Nanocomposites are characterized by mechanical, thermal, optical and electrical properties that differ from those of polymeric matrix.

According to W. Królikowski and Z. Ros 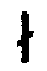 aniec (Nanokompozyty polimerowe, Kompozyty, 4 (2004) 9), "mechanical characteristics of the composite increase with increasing aspect ratio of nanofiller and decreasing nanofiller width". Then the specific surface area of nanofiller increases and the sum of forces acting between the polymeric matrix and nanofiller particles becomes larger. Modern nanocomposite materials have many advantageous features, *inter alia,* high values of Young modulus, high resistance to stress, high elasticity, better barrier capacity in relation to permeation of liquids, optical transparency, electrical conductivity, improved flame resistance, increased thermal resistance and thermal stability. The aforementioned properties can be achieved via a small addition of nanofiller to polymeric matrix. In general, the content of nanofiller ranges from 1 to 5%. The addition of nanofiller to polymeric matrix is mostly realized via *in situ* polymerization, solution mixing method, and direct mixing (in the form of alloy). *In situ* polymerization was the first method used to obtain nanocomposites. At certain stage, nanofiller disperses in liquid monomer and then the second component is added in order to initiate polymerization. The reaction takes place in the vicinity of or inside the nanofiller particles. *In situ* polymerization allows for better homogeneity of dispersion, while the key element of the process is the proper choice of catalysts. The solution mixing method is based on creating appropriate dispersion of the nanofiller in a solvent, which results in the layering of nanofiller and breaking of agglomerates. Such dispersion is added to the polymer dissolved in the same solvent so the nanofiller particles are homogeneously dispersed inside the polymer chains. Finally, solvent is evaporated in order to obtain the nanocomposite. Direct mixing method (in the form of alloy) is based on adding nanofiller to plasticized polymer (for example, in the plasticizing system of twin-screw extruder) and further processing of the obtained product. This allows for obtaining the homogenous dispersion of nanofiller in polymeric matrix. In comparison to other methods, direct mixing method does not require the use of solvents, which is a main advantage [Go 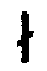 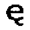 biewski - "Nanokompozyty polimerowe. Struktura, metody wytwarzania i w 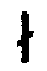 a 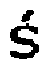 ciwo 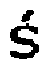 ci" Przemys 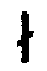 chemiczny 81/1 2004].

A. K. Appel et al. [K. Appel, R. Thomann, R. Mülhaupt, Polyurethane nanocomposites prepared from solvent-free stable dispersions of functionalized graphene nanosheets in polyols, Polymer 53 (2012) 4931-4939] dispersed the thermally reduced graphene oxide (TRG) via shearing forces and high-pressure homogenization in polyol. TRG was obtained by reducing GO that had been the previously synthesized according to the method of Hummers and Offemann. Thermal reduction of GO was conducted at 750 °C under nitrogen atmosphere. Polyurethane/TRG nanocomposites with different content of rigid segments were obtained via *in situ* polymerization. Based on TEM analysis, it appears that TRG exclusively bonds with rigid segments and therefore creates the structural backbone of the material. It has been postulated that urethane groups form hydrogen bonds on TRG surface, which results in the generation of rigid segments on the surface of graphene. Such structure allows for improved rigidity and better strength of material without loosing its property of elongation at break. The rigidity of polyurethane/TRG nanocomposites had improved at the cost of their elongation at break. The authors confirmed that the presence of hydroxyl groups and covalent bonds between graphene and rigid segments improve the mechanical characteristics of nanocomposites. However, the same authors admit that more research is needed in this field.

On the other hand, Dongyu C. et al. [Dongyu Cai, Jie Jin, Kamal Yusoh, Rehman Rafiq, Mo Song, High performance polyurethane/functionalized graphene nanocomposites with improved mechanical and thermal properties, Composites Science and Technology 72 (2012) 702-707] described the effect of graphene oxide (GO) on polyurethanes. For a relatively low content of filler equal 1-4 wt.%, the value of Young modulus, hardness and mechanical strength of nanocomposites visibly increased compared to their unmodified counterparts. A significant increase in thermal stability (by ca. 50 C) of the nanocomposite containing 5 wt.% of GO was also observed.

The application of graphene oxide in aqueous polyurethane dispersions was presented by S. H. Yoon & J. H. Park & E. Y. Kim & B. K. Kim, Preparations and properties of waterborne polyurethane/ allyl isocyanated-modified graphene oxide nanocomposites, Colloid Polym Sci (2011) 289:1809-1814. The authors obtained polyurethanes reinforced with graphene oxide in the amount ranging from 0.5 to 2.0 wt.%. Graphene oxide dissolved in *N,N*-dimethylformamide was added to aqueous polyurethane dispersion. The best reinforcement effect in polyurethanes was achieved by the application of graphene oxide at the level of 1%.

Due Anh Nguyen et al. [Duc Anh Nguyen, Yu Rok Lee, Anjanapura V Raghu, Han Mo Jeong, Cheol Min Shin and Byung Kyu Kim, Morphological and physical properties of a thermoplastic polyurethane reinforced with functionalized graphene sheet, Polym Int 2009; 58: 412-417] obtained thermoplastic polyurethanes containing functionalized graphene layers. By using solution mixing method and applying a 2% content of functionalized nanofiller in polyurethane matrix, the authors produced nanocomposites with electric conductivity at the level of 10⁻⁴ S/cm.

Kim H. et al. (Kim H., et al., Chemistry of materials 2010, 22, s 3441-3450) investigated the influence of graphene oxide and its reduced form on thermoplastic properties of polyurethanes. The authors observed that depending on the method used, one can obtain materials characterized by the low percolation threshold and therefore having good electrical conductance (already present at 0.5 wt.% of TRG) as well as materials which have good barrier capacity (at 3 wt.% of GO).

The invention relates to obtaining polyurethane elastomer nanocomposites modified with graphene oxide or its reduced form, the said nanocomposites having unique performance properties. The method of obtaining polyurethane elastomer nanocomposites is also the object of the invention.

In order to obtain nanocomposites with unique performance properties according to the invention, oligoetherols or oligoestrols with a molecular weight ranging from 400 to 10000 g/mol, or their mixtures, are mixed with diisocyanate (the ratio of oligoetherols or oligoestrols to oligomerol is 2-15:1 relative to isocyanate agent) to generate urethane prepolymer. Next, the chain extenders of low molecular weight (diols or diamines) or cross-linking agents (triols or triamines) are added so the final NCO/OH ratio is from 0.9 to 1.15. Then 0.01-10 parts by weight of amine or organometallic catalysts and 0.01-10 parts by weight of nanofiller are added, the latter being dispersed in one of the aforementioned components.

The advantage of new polyurethane nanocomposites with unique properties is the use of oligomerols (oligoetherols or oligoestrols) with a molecular weight from 400 to 10000 g/mol, a hydroxyl number between 10 and 100 mg KOH/g, and the functionality of 2 as well as the addition of oligomerol mix together with a chain extender or cross-linking agent to urethane prepolymer. In order to obtain urethane prepolymers, preferably 4,4'-diphenylmethane diisocyanate (MDI), 2,4- or 2,6-toluene diisocyanate (TDI) and dicyclohexylmethane-4,4"-diisocyanate are used as isocyanate agent.

The advantage of reinforced polyurethane elastomers according to the invention is the possibility of obtaining materials with desired performance properties and of adjusting the hardness of the final product to the needed level. The main advantage of new polyurethane elastomer nanocomposites with unique performance characteristics is the use of graphene oxide or reduced graphene oxide in the range from 0.01 to 10 parts by weight. The application of nanofillers during the preparation of polyurethane elastomers significantly improves their performance properties.

Polyurethane elastomer nanocomposites made from oligoetherols and/or oligoestrols with a molecular weight from 400 to 10000 g/mol, a hydroxyl number between 10 and 100 mg KOH/g, and the functionality of 2; diisocynates added at the diisocyanate:oligomerol ratio of 2-15:1; diol or diamine chain extenders with low molecular weights, or triol or triamine cross-linking agents with the final NCO/OH ratio from 0.9 to 1.15; 0.01-10 parts by weight of amine or organometallic catalysts; and 0.01-10 parts of nanofiller are characterized according to the invention in that graphene oxide, reduced graphene oxide, or a dispersion of graphene nanofiller in polar or non-polar solvent is applied as a nanofiller.

The method of manufacturing polyurethane elastomer nanocomposites from oligomers, oligoestrols and/or oligoetherols, diisocyanates, chain-extending or cross-linking agents, amine or organometallic catalysts, and graphene oxide or its reduced form is characterized according to the invention in that the oligomer-based prepolymer (i.e. based on oligoetherol and/or oligoestrol with a molecular weight between 400 do 15000 g/mol) containing 4-20% of free isocyanate groups NCO is mixed with 0.01-10 wt.% of graphene nanofiller in the form of graphene oxide, its reduced form or the nanofiller dispersion in polar or non-polar solvent, oligomeric component or the mixture based on oligomerol and low-molecular-weight chain extender, or nanofiller dispersed in isocyanate agent.

In the embodiment of the invention a dispersion of graphene oxide and/or reduced graphene oxide is prepared in water, polar or non-polar solvent, oligomerol, oligomerol mixture containing low-molecular-weight chain extender or cross-linking agent, or in diisocyanate substrate. Next, the dispersion is intensively homogenized at a temperature between 10 and 60 °C and the stirring rate up to 10000 rpm for up to 3 hrs in an ultrasonic bath.

The object of the invention is the method of manufacturing polyurethane elastomer nanocomposites characterized in that prepolymer (the latter obtained from oligoetherols or oligomerols and diisocyanates) containing 4-20% of free NCO groups is mixed with 0.01-10 parts by weight of amine or organometallic catalysts, 0.01-10 parts by weight of graphene oxide or the nanofiller dispersion in water, tetrahydrofuran, *N*,*N-*dimethylformamide, acetone, oligomerol substrate or the mixture of oligomerol and low-molecular-weight diol or triol, and diisocyanate agent. The dispersion is intensively homogenized at a temperature from 10 to 60 °C and the stirring rate up to 10000 rpm for up to 3 hrs in an ultrasound bath in order to be added to the previously prepared urethane prepolymer at the last stage of the procedure.

The invention is described further in the examples of method preparation.

Example 1. The dispersion of graphene oxide was prepared as follows: 30 ml of distilled water were added to the appropriate amount of graphene oxide, and the mixture was homogenized for 1 hr with a high-speed stirrer in a water bath at 30°C. Next, the obtained solution was added to the oligomer component and the mixture was homogenized under a vacuum at 60°C until the nanofiller had properly dispersed in the entire volume of the solution and the water had been completely removed from the system. Such prepared dispersion was mixed with 4,4'-diphenylmethane diisocyanate in order to obtain urethane prepolymer containing GO and 12% of free NCO at the prepolymer stage. In the next step, prepolymer reacted with 1,4-butanediol at the NCO/OH ratio of 1.05.

Example 2. The dispersion of thermally reduced graphene oxide was prepared as follows: 30 ml of chloroform was added to the appropriate amount of TRG and the mixture was mixture was homogenized for 1 hr with a high-speed stirrer in a water bath at 30 °C. Next, the obtained solution was added to the oligomer component and the mixture was homogenized under a vacuum at 60 °C until the nanofiller had properly dispersed in the entire volume of the solution and chloroform had been completely removed from the system. Such prepared dispersion was mixed with 4,4'-diphenylmethane diisocyanate in order to obtain urethane prepolymer containing TRG and 12% of free NCO groups at the prepolymer stage. In the next step, prepolymer reacted with 1,4-butanediol at the NCO/OH ratio of 1.05.

Example 3. The dispersion of thermally reduced graphene oxide was prepared as follows: 30 ml of chloroform was added to the appropriate amount of TRG and the mixture was mixture was homogenized for 1 hr with a high-speed stirrer in a water bath at 30°C. Next, the obtained solution was added to the oligomer component and low-molecular-weight chain extender 1,4-butanediol; the mixture was homogenized under a vacuum at 60 °C until the nanofiller had properly dispersed in the entire volume of the solution and chloroform had been completely removed from the system. Such prepared mixture of oligomerol and 1,4-butanediol/TRG was mixed with urethane prepolymer containing 16% of free NCO groups that had been obtained from 4,4'-diphenylmethane diisocyanate and oligoetherol (polytertamethyleneglycol with a molecular weight of 2000 g/mol). The final NCO/OH ratio was 1.05.

Example 4. The dispersion of thermally reduced graphene oxide was prepared as follows: the mixture of oligomerol (PTMG or Polios 55/20) and 1,4-butanediol at specific ratio was added to the appropriate amount of TRG; the mixture was homogenized for 1 hr with a high-speed stirrer in a water bath at 60 °C. Such prepared mixture of oligomerol and 1,4-butanediol/TRG was mixed with urethane prepolymer containing 19% of free NCO groups that had been obtained from 4,4'-diphenylmethane diisocyanate and oligomerol (polytertamethyleneglycol with a molecular weight of 2000 g/mol or Polios 55/20 with a molecular weight of 2000 g/mol). The amine catalyst in the form of DABCO 33 LV (1,4-Diazabicyclo[2.2.2]octane) was applied. The final NCO/OH ratio was 1.05.

## Claims

1. Polyurethane elastomer nanocomposites obtained from oligoetherols and/or oligoestrols with a molecular weight from 400 to 10000 g/mol, a hydroxyl number between 10 and 100 mg KOH/g, and the functionality of 2; diisocynates added at the diisocyanate:oligomerol ratio of 2-15:1; diol or diamine chain extenders with low molecular weights, or triol or triamine cross-linking agents with the final NCO/OH ratio from 0.9 to 1.15; 0.01-10 parts by weight of amine or organometallic catalysts; and 0.01-10 parts of nanofiller **characterized in that** graphene oxide, reduced graphene oxide or the dispersion of graphene nanofiller in polar or non-polar solvent is used as a nanofiller.

2. Method of manufacturing polyurethane elastomeric nanocomposites obtained from oligomers, oligoestrols and/or oligoetherols; diisocyanates; chain extenders or cross-linking agents; amine or organometallic catalysts; and graphene oxide or its reduced form **characterized in that** 0.01 to 10 wt.% of graphene nanofiller in the form of graphene oxide or its reduced form, or a prepared dispersion of graphene nanofiller in polar or non-polar solvent, in oligomeric component or in the oligomerol-based mixture with low-molecular-weight chain extender, or dispersed in isocyanate agent is added to the prepolymer containing 4-20% of free isocyanate groups NCO which is obtained from oligomers in the form of oligoetherols and/or oligoestrols with a molecular weight between 400 and 15000 g/mol.

3. Method according to claim 2 **characterized in that** the dispersion of graphene oxide and/or reduced graphene oxide is prepared in water, polar or non-polar solvent, oligomeric component, oligomeric mixture containing low-molecular-weight chain extender or cross-linking agent, or diisocyanate substrate and then, the dispersion is intensively homogenized at a temperature from 10 to 60 °C and the stirring rate up to 10000 rpm for up to 3 hrs in an ultrasonic bath.
